(19) Europäisches Patentamt
European Patent Office
Office européen des brevets

(11) **EP 4 019 232 A1**

(12) **EUROPÄISCHE PATENTANMELDUNG**

(43) Veröffentlichungstag:
**29.06.2022 Patentblatt 2022/26**

(21) Anmeldenummer: **21217012.0**

(22) Anmeldetag: **22.12.2021**

(51) Internationale Patentklassifikation (IPC):
**B29C 70/22** *(2006.01)* **B29C 70/48** *(2006.01)*
**F03D 1/06** *(2006.01)* **B29C 70/20** *(2006.01)*
**B29D 99/00** *(2010.01)* **B29C 70/54** *(2006.01)*
**B29C 70/44** *(2006.01)* **B29C 70/38** *(2006.01)*
**B29L 31/08** *(2006.01)* **B29C 35/08** *(2006.01)*
**B29C 70/34** *(2006.01)* **B29C 70/46** *(2006.01)*

(52) Gemeinsame Patentklassifikation (CPC):
**B29C 70/38; B29C 70/202; B29C 70/228;**
**B29C 70/48; B29D 99/0025; F03D 1/0675;**
B29C 70/345; B29C 70/443; B29C 70/46;
B29C 70/541; B29C 2035/0822; B29D 99/0028;
B29L 2031/082; B29L 2031/085; F05B 2280/6003

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **22.12.2020 DE 102020134610**

(71) Anmelder:
• **Brandenburgische Technische Universität
Cottbus-Senftenberg
03046 Cottbus (DE)**
• **EAB Gebäudetechnik Luckau GmbH
15926 Luckau (DE)**

(72) Erfinder:
• **Seidlitz, Holger
03172 Guben (DE)**
• **Zschieck, Martin
03044 Cottbus (DE)**
• **Pfizenmaier, Gero
03046 Cottbus (DE)**
• **Beloch, Christian
15926 Luckau (DE)**

(74) Vertreter: **Hertin und Partner
Rechts- und Patentanwälte PartG mbB
Kurfürstendamm 54/55
10707 Berlin (DE)**

(54) **ROTORBLATT FÜR EINE WINDENERGIEANLAGE UND VERFAHREN ZUR HERSTELLUNG EINES SOLCHEN ROTORBLATTES**

(57) Die Erfindung betrifft ein Verfahren zur Herstellung eines Rotorblattes für eine Windenergieanlage. Darüber hinaus betrifft die Erfindung ein Rotorblatt sowie eine Windenergieanlage. Das erfindungsgemäße Verfahren weist dabei vorteilhafte Prozessschritte auf, die dazu führen, dass das Rotorblatt im Einsatz von Windenergieanlagen sich passiv auf äußere Parameter einstellen kann. Insbesondere wird der Koppeleffekt ausgenutzt, der durch richtungsabhängiges Laminieren verschiedener faserverstärkter Laminatschichten erhalten wird.

**EP 4 019 232 A1**

**Beschreibung**

Technisches Gebiet

Die Erfindung betrifft ein Verfahren zur Herstellung eines Rotorblattes für eine Windenergieanlage. In einem ersten Schritt wird das Rotorblatt über ein Berechnungsverfahren ausgelegt. Abhängig von der Auslegung wird anschließend ein faserverstärkter Kunststoff-Stapel mit einer Vielzahl von unidirektionalen Faserlagen bereitgestellt. Dabei weisen jeweils aufeinanderfolgende Faserlagen unterschiedliche Faserorientierungen auf. In einem weiteren Schritt wird der Kunststoff-Stapel zu einer Rotorblatt-Halbschale geformt. In einem letzten Schritt wird die erste Rotorblatt-Halbschale und eine zweite Rotorblatt-Halbschale sowie ein Rotorblattfuß über ein Fügeverfahren miteinander verbunden. Dabei ist der Rotorblattfuß zwischen beiden Halbschalen positioniert, sodass ein Rotorblatt erzeugt wird.

Weiterhin betrifft die Erfindung ein Rotorblatt, welches bevorzugt durch das oben beschriebene Verfahren hergestellt wurde sowie eine Windenergieanlage, die ein oder mehrere derartiger Rotorblätter umfasst.

Hintergrund und Stand der Technik

Erneuerbare Energiequellen gelten, neben der effizienten Nutzung von Energie, als wichtigste Säule einer nachhaltigen Energiepolitik und der Energiewende. Insbesondere der Windenergie kommt dabei eine hohe Bedeutung zu. Windenergieanlagen sind heute mit Abstand die wichtigste Form der Nutzung der Windenergie. Eine Windenergieanlage wandelt die Energie des Windes in elektrische Energie, um sie dann in ein Stromnetz einzuspeisen.

Bekannte Windenergieanlagen weisen eine geringe Leistungsausbeute im Binnenland auf, verbunden mit einem hohen Zeit- und Kostenaufwand für die Herstellung der Rotorblätter. Dies ist dadurch bedingt, dass die Anlagen bevorzugt für Küstengebiete konzipiert sind, wo ausreichende Starkwinde zur Verfügung stehen. Im Binnenland können die Anlagen nicht genug Leistung erbringen, da die Rotoren bedingt durch das hohe Eigengewicht sehr träge sind und durch die starre Geometrie der Blätter bei hohen Windgeschwindigkeiten mechanisch oder elektrisch abgebremst werden müssen.

Weiterhin sind Rotorblätter von kleinen Windenergieanlagen bekannt, welche für Stark -und Mittelwindregionen ausgelegt sind. Sie werden von den Herstellern nach Ähnlichkeitsregel in der Größe skaliert und dann von den Windenergieanlagenbauern bezogen. Deshalb sind die Rotorblätter in der Regel nicht individuell auf die jeweilige Anlage abgestimmt.

Ferner werden Rotorblätter bislang aus glasfaserverstärkten Kunststoffen im Handlaminatverfahren hergestellt. Dies ist nachteilig zeit- und kostenintensiv und weist eine geringe Reproduzierbarkeit auf. Darüber hinaus sind die in diesem Zusammenhang verwendeten Matrixwerkstoffe duroplastische Harze, welche bei der Verarbeitung gesundheitsschädliche Lösungsmitteldämpfe freigeben und entsprechende Schutzmaßnamen erfordern. Durch die große Anzahl an händischen Arbeitsschritten sind die mechanischen Eigenschaften des Rotorblattes nicht gleichmäßig und erfordern eine hohe Sicherheitsauslegung. Dies führt zu dicken Wandstärken und infolgedessen nachteilig zu einem erhöhten Gewicht des Rotorblattes.

Die Rotordrehzahl von herkömmlichen kleinen Windenergieanlagen wird konstant oberhalb der Nenndrehzahl gehalten. Dies kann durch Strömungsabriss (Stall) oder Neigungswinkelverstellung (Pitch) erfolgen. Das Abbremsen der Rotorwelle erfolgt hingegen bevorzugt durch den Einsatz von Heizwiderständen. Durch eine stufenweise Erhöhung des elektrischen Widerstands wird der Generator kurzgeschlossen und kann so die Anlage bis zum Stillstand abbremsen. Die Stall-Rotoren sind steif mit der Rotorwelle verbunden. Dies führt bei hohen Windgeschwindigkeiten zu hohen mechanischen Belastungen an den Blattfüßen und am Turm der Windenergieanlage. Anlagen, die durch Rotorblätter mit Neigungswinkelverstellung (Pitch) geregelt sind, müssen den jeweiligen Windverhältnissen angepasst werden. Bei großen Anlagen - im Megawatt-Bereich - wird der Blattwinkel aktiv durch hydraulische oder elektrische Verstellmotoren geändert. Dies führt zu besseren Leistungskennlinien der Anlagen und reduziert die mechanischen Belastungen an der Anlage.

Bei kleinen Windenergieanlagen wird eine aktive Blattwinkelverstellung, bedingt durch die hohen Investitionskosten und dem geringen Platzaufkommen, nicht eingesetzt. Einige wenige kleine Windenergieanlagen nutzen eine passive Blattwinkelverstellung. Hier wird durch ein System mittels Federn und Gewichten das Rotorblatt entsprechend des Winddruckes in den Wind gedreht und reduziert dadurch die Belastungen an der Anlage. Diese Systeme müssen regelmäßig gewartet werden und lassen sich nicht an bestehenden Anlagen nachrüsten.

DE 10 2014 204 591 B3 offenbart ein Rotorblatt für ein Gezeitenkraftwerk, das für eine passive Drehung in die Fahnenstellung bei hohen Anströmungsgeschwindigkeiten konfiguriert ist. Das Rotorblatt soll außerdem auf den Gezeitenwechsel in einer Flussmündung reagieren. Die passive Drehung erfolgt mittels zwei Längsträger mit jeweils einem Schwerpunkt. Abhängig von der Anströmungsrichtung liegt der Schwerpunkt einer der zwei Längsträger stromaufwärts eines Kraftangriffspunkts, während der andere Schwerpunkt stromabwärts liegt. Der Längsträger, dessen Schwerpunkt stromabwärts liegt, erfährt eine größere Querauslenkung als der andere Längsträger. Der Unterschied zwischen den Querauslenkungen der zwei Teile führt zu einer passiven Drehung des Rotorblatts. Das Rotorblatt benötigt eine komplexe innere Struktur, um diese passive Drehung im Wasser zu erreichen. Die Herstellung eines solchen Rotorblatts ist deshalb kompliziert und das entstehende Rotorblatt erfordert einen hohen Wartungsaufwand.

Es sind Rotorblätter für sogenannte Mikro-Windenergieanlagen (üblicher Rotordurchmesser < 1 m) bekannt, die mit Matrixwerkstoffen auf thermoplastischer Basis im Spritzgussverfahren automatisiert hergestellt werden, bei dem die Kavität des Formwerkzeugs mit der thermoplastischen Kunststoffschmelze gefüllt, abgekühlt und automatisch ausgeworfen wird. Häufig werden in diesem Verfahren Rotorblätter aus einem Stück in Vollbauweise gefertigt, wodurch sie nach dem Entformen endkonturnah sind und nur wenig Nachbearbeitung erfordern. Die Nachteile bei Rotorblättern in dieser Bauweise ist der hohe Materialaufwand und der durch die Wärmeeinbringung und Abkühlung entstehende Verzug der Bauteile. Dadurch steigt das Systemgewicht, was einen negativen Einfluss auf die Leistungsausbeute ausübt. Außerdem ist die Maßhaltigkeit der Rotorblätter stark limitiert.

Als weiteres Beispiel für den Stand der Technik offenbart DE 10 2010 014 961 A1 ein Formwerkzeug zur Herstellung von Rotorblättern aus Faser-Kunststoff-Verbünden. Das Formwerkzeug umfasst verstellbare Randelemente, die so gestaltet sind, dass das Werkzeug an leicht unterschiedliche Serien angepasst werden kann.

DE 10 2011 078 951 A1 offenbart ein Verfahren zur Herstellung eines Rotorblatts aus lagenförmigen Faservorformlingen. Diese bestehen aus einem Kernmaterial, das zwischen Fasergelegen angeordnet vorliegt. Die Faservorformlinge werden in einer Hauptform aufeinander gelegt und durch Schmelzbinden, Kleben oder Nähen zusammengefügt.

DE 10 2017 124 861 A1 offenbart ein Rotorblatt, das aus mehreren kürzeren Teilen besteht, um den Transport zu erleichtern. Diese werden nach dem Transport aneinander gefügt.

EP 2 433 782 B1 offenbart ein Verfahren zur Herstellung eines Rotorblatts aus zwei komplementären Schalen. Jede der Schalen wird durch ein "Tuch" umfassend trockene Fasermatten gebildet. Das Tuch wird während der Herstellung mit Harz imprägniert.

DE 10 2017 001 404 A1 offenbart ein faserverstärktes Rotorblatt umfassend zwei Rotorblattschalen, welche eine Rotorblatt-Hinterkante bilden. Das Rotorblatt umfasst ein abgeschnittenes Profil, das mit der Hinterkante verbunden ist, sowie ein spitz auslaufendes Profil. Eine Biegeversteifung erstreckt sich entlang zumindest eines Teils der Ausdehnung des abgeschnittenen Profils in Längsrichtung. Die Biegeversteifung sorgt dafür, dass die Hinterkante in Längsrichtung keine Wellen ausbildet.

EP 2 295 235 A1 offenbart ein Verfahren zur Herstellung eines Rotorblatts aus einem faserverstärkten Laminatstapel. Die Laminatstapel werden verwendet, um zwei Schalen zu bilden, die durch eine Matte mit zufällig geschnittenen Fasern miteinander verbunden sind. Die zufällige Ausrichtung der Fasern verhindert Risse entlang einer bestimmten Richtung.

DE 10 2014 221 966 A1 offenbart ein Verfahren zur Herstellung eines Rotorblatts aus mehreren Segmenten. Mindestens ein im Bereich einer Rotorblattwurzel vorgesehenes Segment wird aus einer Preform durch Infusion mit Harz gefertigt. Die Preform wird dann in eine Hauptform eingelegt und mit weiteren Preformen und/oder Fasergelegen verbunden. Die Herstellungsdauer wird hierdurch verringert.

US 2020 025 178 A1 offenbart ein Rotorblatt mit einer Kombination von elektrisch leitfähigen Fasern zum besseren Schutz gegen Blitzschlag. Die Fasern sind in Winkeln zueinander überlappt. Die vorgeschlagenen Überlappungen verringern Anisotropien in der Materialleitfähigkeit und vermeiden Lichtbögen oder Funkenbildung und damit Delaminationen im Trägerelement, wenn ein Strom geleitet wird.

JP 2016 032929 A offenbart thermoplastische Laminatstapel, welche für die Verwendung in einem Rotorblatt geeignet sind. Die Stapel eignen sich zum Ordnen und Gestalten in einer Hauptform. Die Laminatkomponenten sind so gestaltet, dass sie nach Ablauf der Lebensdauer des Rotorblatts entfernt und recycelt werden können.

DE 10 2012 019 351 A1 offenbart ein Verfahren zum Zusammenfügen eines Rotorblatts aus einem blattwurzelseitigen Segment und einem blattspitzenseitigen Segment sowie einer Positioniereinheit zu diesem Zweck.

Einige dieser Beispiele verwenden faserverstärkte Laminate, um Rotorblätter in einem verbesserten Verfahren herzustellen. Das Verfahren mag in mancher Hinsicht vereinfacht worden sein. Die oben erläuterten Nachteile bei der Anpassung des Neigungswinkels des Rotorblatts durch konventionelle Methoden werden jedoch in diesen Beispielen nicht angesprochen. Stattdessen wird eine teilweise Überwindung dieser Nachteile nur durch den Einsatz komplexer Systeme, wie das in DE 10 2014 204 591 B3 beschriebene, erreicht, das ein viel komplexeres Herstellungsverfahren erfordert. Außerdem wird in keinem der oben zitierten Dokumente versucht, die Leistung eines Rotorblatts in Mittel- bis Schwachwindregionen zu verbessern.

Es besteht daher ein Bedarf an einem Rotorblatt mit verbesserten Eigenschaften und Leistungen, insbesondere in Regionen mit geringerer Windstärke, das gleichzeitig einfach herzustellen und zu warten ist.

Aufgabe der Erfindung

Aufgabe der Erfindung war es somit, die Nachteile des Standes der Technik zu beseitigen und ein leichtes Rotorblatt für eine kleine Windenergieanlage und ein Verfahren zur Herstellung eines solchen Rotorblattes bereitzustellen, wobei das Rotorblatt dazu geeignet ist, an bestehenden Anlagen nachgerüstet zu werden und sich passiv an äußere Windparameter anzupassen, ohne dabei ein hohes Aufkommen an Wartungsarbeiten aufzuweisen. Darüber hinaus soll das Verfahren eine gute Reproduzierbarkeit, eine kurze Prozesszeit und eine hohe Umweltfreundlichkeit aufweisen.

Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung ein Verfahren zur Herstellung eines Rotorblattes für eine Windenergieanlage dadurch gekennzeichnet, dass

a) das Rotorblatt über Berechnungsverfahren ausgelegt wird;

b) abhängig von der Auslegung ein faserverstärkter Kunststoff-Stapel mit einer Vielzahl von unidirektionalen Faserlagen automatisiert bereitgestellt wird, wobei aufeinanderfolgende Faserlagen eine unterschiedliche Faserorientierung aufweisen;

c) der Kunststoff-Stapel zu ein einer Rotorblatt-Halbschale geformt wird;

d) die erste Rotorblatt-Halbschale und eine zweite Rotorblatt-Halbschale sowie ein Rotorblattfuß über ein Fügeverfahren miteinander verbunden werden,

wobei der Rotorblattfuß zwischen beiden Halbschalen positioniert ist, sodass ein Rotorblatt erzeugt wird.

Eine Auslegung des Rotorblatts über ein Berechnungsverfahren bezieht sich vorzugsweise auf eine Ausgestaltung der geometrischen Form des Rotorblatts. Die Form wird vorzugsweise durch eine Reihe von Berechnungen angepasst, die die aerodynamischen Auswirkungen von Form und Größe des Rotorblatts bei schwachen bis mittleren Windgeschwindigkeiten berücksichtigen, um seine Leistung unter diesen Bedingungen zu maximieren. Der Fachmann kann die Form des Rotorblatts unter Anwendung der hier offenbarten Lehren anpassen, um die Leistung ohne übermäßigen Aufwand zu verbessern.

Das so entstandene Rotorblatt unterscheidet sich von den bekannten Rotorblättern vorzugsweise dadurch, dass es keine einfache Verkleinerung der in Küstenregionen verwendeten großen Rotorblätter ist, sondern eine deutlich andere Form aufweist, die vom Fachmann als an die schwächeren Windverhältnisse angepasst erkannt werden kann.

Vorzugsweise sind die Faserlagen ebenfalls für den Einsatz mit einem solchen Rotorblatt in einem schwächeren Windbereich geeignet.

Das erfindungsgemäße Herstellverfahren ist mit wesentlichen Vorteilen behaftet und genügt den höchsten Industriestandards in Bezug auf Energieeffizienz, Reproduzierbarkeit, Prozesszeit, Wirtschaftlichkeit, Automatisierungsgrad etc. Im Folgenden werden die Vorteile des Verfahrens deutlich herausgestellt.

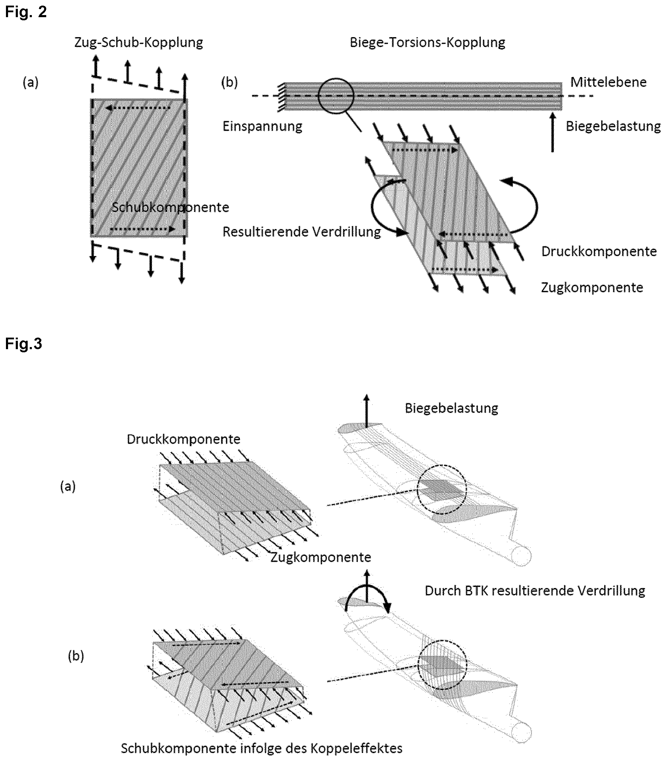

Die Kombination der vorliegenden Verfahrensschritte führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinander stehen. Insbesondere das gezielte automatisierte Ablegen von unidirektionalen faserverstärkten Faserlagen in Bezug auf einen Kunststoff-Stapel ermöglicht die Ausnutzung des sogenannten Koppeleffektes (s. auch Fig. 2 und Fig. 3 sowie die zugehörigen Erläuterungen) in einem gefertigten Rotorblatt. Aufgrund des Koppeleffektes kann sich das Rotorblatt passiv auf äußere Gegebenheiten (Windstärke, Windrichtung) im Einsatz einer Windenergieanlage anpassen, wobei der Effekt insbesondere den Neigungswinkel des Rotorblattes entsprechend der Windgeschwindigkeiten ausrichten und im Zusammenwirken mit weiteren einer Windenergieanlage umfassten Rotorblätter selbstständig die Drehzahl des Rotors konstant halten kann.

Überraschenderweise wurde festgestellt, dass durch die Anordnung der Faserlagen, der erzeugte Koppeleffekt zu einer kontinuierlichen Torsion des Rotorblatts über seine gesamte Länge führen konnte. Durch den Aufbau der Faserlagen konnte diese Torsion punktuell geändert werden. Dies ist besonders vorteilhaft gegenüber dem Stand der Technik, bei dem das Rotorblatt nur zwischen zwei Positionen in einem Fluidstrom wechseln kann.

Zusätzlich werden die Rotorblätter so ausgelegt. dass sie generell vorteilhaft für Schwach- und Mittelwindregionen aerodynamisch angepasst sind. Der Rotorblattfuß soll nach oder beim Fügen der Oberseite und Unterseite des Rotors als Formelement eingepasst werden. Um die Rotorblätter an bestehenden Anlagen vorteilhaft nachrüsten zu können, sind diese bevorzugt modular konzipiert.

In einer bevorzugten Ausführungsform der Erfindung ist das Verfahren zur Herstellung eines Rotorblattes für eine Windenergieanlage dadurch gekennzeichnet, dass

a) ein faserverstärkter Kunststoff-Stapel mit einer Vielzahl von unidirektionalen Faserlagen automatisiert bereitgestellt wird, wobei aufeinanderfolgende Faserlagen eine unterschiedliche Faserorientierung aufweisen, wobei die Faserorientierung dafür konfiguriert ist, einen anisotropen Koppeleffekt zwischen benachbarten Lagen zu erzeugen, um einen Neigungswinkel des Rotorblattes Windgeschwindigkeiten anzupassen;

b) der Kunststoff-Stapel zu einer ersten Rotorblatt-Halbschale geformt wird;

c) die erste Rotorblatt-Halbschale und eine zweite Rotorblatt-Halbschale sowie ein Rotorblattfuß über ein Fügeverfahren miteinander verbunden werden, wobei der Rotorblattfuß zwischen beiden Halbschalen positioniert ist, sodass ein Rotorblatt erzeugt wird.

Vorzugsweise ist die Faserorientierung dafür konfiguriert, einen Neigungswinkel des Rotorblattes an einer schwachen Windgeschwindigkeit anzupassen. Vorzugsweise kann der Neigungswinkel durch den Koppeleffekt bis zu mindestens 10°, bevorzugt bis zu mindestens 12° in Richtung einer Fahnenstellung passiv verändert werden.

Im Sinne der vorliegenden Erfindung bezeichnet ein Schwachwindbetrieb oder eine Schwachwindgeschwindigkeit vorzugsweise eine Windgeschwindigkeit zwischen 1-40 km/h, besonders bevorzugt zwischen 3 - 30 km/h. Eine Mittelgeschwindigkeit bezeichnet vorzugsweise eine Windgeschwindigkeit zwischen 25 km/h - 45 km/h, vorzugsweise 30 km/h - 40 km/h. Eine Starkwindgeschwindigkeit bezeichnet vorzugsweise eine Windgeschwindigkeit über 40 km/h, vorzugsweise über 45 km/h.

Ein geeigneter Winkel zwischen den Fasern benachbarter Lagen, der erforderlich ist, um den gewünschten Effekt zu erzielen, kann vom Fachmann durch routinemäßige Arbeiten und Versuche mit den gewählten Materialien ohne übermäßigen Aufwand ermittelt werden.

Es hat sich jedoch überraschenderweise herausgestellt, dass durch die Einstellung des Winkels zwischen 20° und 30° und/oder zwischen -20° und -30° zu einer Längsachse des Rotorblatts ein besonders effektiver Koppeleffekt für eine Vielzahl von Materialien und geometrischen Größen erzielt werden kann.

Unter einer automatischen Bereitstellung der unidirektionalen Faserlagen ist vorzugsweise jeder Prozess der Lagenvorbereitung zu verstehen, der nicht von Hand durchgeführt wird. Vorzugsweise werden die Faserlagen durch ein Automated Fiber Placement Prozess (AFP) bereitgestellt. Beim AFP werden faserverstärkte Kunststoffbänder unter Druck und Temperatur mittels Roboterarm entlang eines vorgegebenen Pfads auf einer Werkzeugoberfläche abgelegt.

In einer weiteren bevorzugten Ausführungsform ist das Verfahren zur Herstellung eines Rotorblattes für eine Windenergieanlage dadurch gekennzeichnet, dass

a) das Rotorblatt über Berechnungsverfahren ausgelegt wird;
b) abhängig von der Auslegung eine Vielzahl von unidirektionalen faserverstärkten Thermoplast-Halbzeugen übereinander zu einem Thermoplast-Stapel abgelegt werden, wobei aufeinanderfolgende Thermoplast-Halbzeuge unterschiedliche Faserorientierungen aufweisen;
c) der Thermoplast-Stapel über eine Heizquelle erwärmt wird, bis der Thermoplast-Stapel einen semiplastischen Zustand erreicht;
d) der erwärmte Thermoplast-Stapel in einer Formpresse zu einer ersten Rotorblatt-Halbschale gepresst wird;
e) die erste Rotorblatt-Halbschale und eine zweite Rotorblatt-Halbschale sowie ein Rotorblattfuß über ein Fügeverfahren miteinander verbunden werden, wobei der

Rotorblattfuß zwischen beiden Halbschalen positioniert ist, sodass ein Rotorblatt erzeugt wird.

Insbesondere wird ein Rotorblatt - entgegen bekannten Verfahren aus dem Stand der Technik - nicht anhand eines Handlaminatverfahrens, sondern durch gezielte und kraftschlussgerechte Ablage von Fasern in einem automatisierten Prozess hergestellt, bevorzugt mit Hilfe des Automated fiber placement Prozesses (AFP). Beim AFP werden faserverstärkte Kunststoffbänder unter Druck und erhöhter Temperatur mittels Roboterarm entlang eines vorgegebenen Pfades auf der Werkzeugoberfläche abgelegt. Dies ermöglicht ein besonders schnelles und wirtschaftliches Herstellverfahren. Der automatisierte Prozess sorgt darüber hinaus dafür, dass geringe Abweichungen der herzustellenden Rotorblätter zueinander besteht (Gewicht, Form) und demnach eine sehr gute Reproduzierbarkeit vorhanden ist.

Ferner entstehen durch die Verwendung von Thermoplasten keine gesundheitsschädlichen Lösungsmitteldämpfe bei der Verarbeitung. Auch im Hinblick auf die Umwelt ist die Verwendung von Thermoplasten von Vorteil, denn diese lassen sich sehr gut recyceln.

Faserverstärkte Thermoplast-Halbzeuge bestehen erfindungsgemäß bevorzugt aus Fasern, die in eine sie umgebende Matrix (hier: Thermoplaste) eingebettet sind. Während die Faser die Verstärkungskomponente in dem entstehenden Werkstoff übernimmt, dient die Matrix dazu, die Fasern räumlich zu fixieren, die Kräfte auf die Fasern zu übertragen, die Fasern bei Druckbeanspruchung zu stützen und die Fasern vor der Einwirkung von Umgebungsmedien zu schützen. Für die im Verfahren verwendeten faserverstärkten Thermoplast-Halbzeuge können bevorzugt Faserverstärkungen verwendet werden, die ein Gelege und/oder Vlies umfassen. Diese sind bevorzugt unidirektional ausgestaltet, was bedeutet, dass alle Fasern in eine Richtung orientiert sind. Bei Vliesen werden bevorzugt kurze Fasern (z. B. unter 10 cm) umfasst. Dabei können die Fasern bevorzugt "filzartig" miteinander verwebt sein.

Erfindungsgemäß ist es bevorzugt, dass der Kunststoff-Stapel als ein Thermoplast-Stapel und/oder ein Duroplast-Stapel ausgestaltet ist. Es versteht sich, dass ein faserverstärkter Kunststoff-Stapel (im Falle eines Thermoplast-Stapel) mehrere Lagen/Schichten von Thermoplast-Halbzeugen umfassen kann. Da jedes Thermoplast-Halbzeug eine unidirektional ausgestaltete Faserverstärkung aufweist, weist jedes Thermoplast-Halbzeug demnach eine Faserlage auf. Eine Faserlage ist für sich gesehen eine Faseranordnung, welche nicht in Kunststoff eingebettet und/oder umfasst sein muss - sondern ein Fasergebilde darstellt, wie zum Beispiel Vliese, Gewebe, Gelege etc. Weiterhin bevorzugt ist eine Faserlage auch als eine Faserschicht zu bezeichnen. Im Falle eines faserverstärkten Duroplast-Stapels können mehrere Faserlagen in einem Duroplast zu einem Stapel eingebettet vorliegen.

In einer bevorzugten Ausführungsform werden für die Faserverstärkungen Fasern ausgewählt aus der Gruppe umfassend: Glasfaser, Aramidfaser oder Kohlenstofffaser. Bevorzugt können ebenfalls Mischtypen der genannten Fasertypen als Faserverstärkung verwendet werden. Glasfasern sind vorteilhaft preisgünstig in der Beschaffung und besitzen zudem ausgezeichnete mechanische, thermische, dielektrische und chemische Eigenschaften. Kohlenstofffasern weisen vorteilhaft eine sehr hohe Festigkeit und hohe Steifigkeit auf. Darüber hinaus ist das spezifische Gewicht von Kohlenstofffasern besonders niedrig. Demnach wird bei der Verwendung von Kohlenstofffasern die Durchbiegung und das Gewicht des Rotorblattes verringert. Ferner weisen Kohlenstofffasern überaus gute Eigenschaften in Bezug auf die Dauerfestigkeit bei dynamischer Belastung auf. Aramidfasern sind vorteilhaft gegenüber abrieb- und schlagbeanspruchte Teile. Weitere vorteilhafte Eigenschaften von Aramidfasern sind das gute Dämpfungsvermögen, die Nichtentflammbarkeit und die hervorragende chemische Beständigkeit.

Im Sinne der Erfindung können auch Naturfasern als Faserverstärkung verwendet werden. Diesbezüglich eignen sich insbesondere Materialien ausgesucht aus der Gruppe umfassend Hanf, Flachs, Bambus, Sisal und/oder Kenaf. Dem Fachmann ist ersichtlich, dass auch Mischungen aus vorgenannten Fasertypen angewendet werden können. Neben sehr guten Umwelteigenschaften weisen die Naturfasern im Kontext eines faserverstärkten Kunststoffs bereits ökonomische Vorteile gegenüber klassischen Faserverstärkungen auf. Darüber hinaus war nicht zu erwarten, dass naturfaserverstärkte Kunststoffe eine überraschend hohe Stabilität aufweisen. Ein weiterer Vorteil ist die geringe abrasive Neigung der Fasern im Vergleich zu anorganischen Füllstoffen.

Wie oben beschrieben werden eine Vielzahl von faserverstärkten unidirektional ausgestalteten Thermoplast-Halbzeugen zu einem Thermoplast-Stapel gelegt. Jedes Thermoplast-Halbzeug definiert dabei bevorzugt eine Lage des Thermoplast-Stapels.

Das erfindungsgemäß bevorzugte Formpress-Verfahren für den Prozess des Umformens eines Thermoplast-Stapels zu einer Rotorblatt-Halbschale eignet sich bevorzugt vor allem für mittelgroße Stückzahlen.

Die Werkzeugkosten sind dabei sehr gering anzusehen, wesentlich geringer als zum Beispiel beim Spritzgießen. Im Gegensatz zu diesem eignet sich das Formpressen auch vorteilhaft gut zur Herstellung von Faserverbundwerkstoffen wie naturfaserverstärkten Kunststoffen. Durch den Druck erlangt die Formmasse bzw. der Thermoplast-Stapel die vom Werkzeug vorgegebene Form, nämlich die Form einer Halbschale.

In einer weiteren bevorzugten Ausführungsform ist das Verfahren dadurch gekennzeichnet, dass der faserverstärkte Kunststoff-Stapel als ein faserverstärkter Duroplast-Stapel ausgestaltet ist,

- wobei eine Vielzahl von unidirektionalen Faserlagen in eine Form einer ersten Rotorblatt-Halbschale abgelegt, wobei aufeinanderfolgende Faserlagen eine unterschiedliche Faserorientierungen aufweisen;
- wobei die Faserlagen unter Vakuum mit einem Gemisch aus einem Harz und einem Härter infundiert und ausgehärtet, sodass eine erste Rotor-Halbschale erhalten wird.

Im Sinne der Erfindung kann auch ein Harzinfusions-Verfahren mit Duroplasten für den Prozess des Urformens eines Faser-Stapels als formgebendes Verfahren zu einer Rotorblatt-Halbschale abgelegt und infundiert werden. Dies eignet sich bevorzugt vor allem für kleine und mittelgroße Stückzahlen. Die Werkzeugkosten sind dabei als sehr gering anzusehen, wesentlich geringer als zum Beispiel beim Spritzgießen. Durch den Unterdruck erlangt die Formmasse bzw. erlangt der Duroplast-Stapel die vom Werkzeug vorgegebene Form, nämlich die Form einer Halbschale.

In verschiedenen Ausführungsformen kann der Begriff "semiplastisch" bevorzugt auch die Bedeutung von verformbar bzw. plastisch annehmen.

In einer weiteren bevorzugten Ausführungsform ist das Verfahren dadurch gekennzeichnet, dass das Berechnungsverfahren das Rotorblatt geometrisch und/oder strukturell auslegt, wobei die geometrische Auslegung in Bezug auf einen Schwachwindbetrieb erfolgt und die strukturelle Auslegung in Bezug auf einen anisotropen Koppeleffekt erfolgt. Die gezielte Auslegung der Rotorblätter im Herstellverfahren führt zu einer erhöhten Energieausbeute und Anlageeffizienz infolge verringerter benötigter Anlaufgeschwindigkeit und Trägheit des Rotorblattes.

In einer weiteren bevorzugten Ausführungsform ist das Verfahren dadurch gekennzeichnet, dass eine geometrische Form der ersten und der zweiten Rotorblatthalbschalen für einen Schwachwindbetrieb konfiguriert ist.

Die Auslegung von Bauteilen erfolgt bevorzugt durch die Berücksichtigung von zulässigen Verformungen, Dehnungen bzw. Auslenkungen. Bei der Auslegung von faserverstärkten Bauteilen wird bevorzugt sicherheitshalber so dimensioniert, dass neben den geforderten maximalen Verformungen die einzelnen Laminatschichten die zulässigen bzw. kritischen Dehnungen nicht überschreiten, d.h. es wird gegen ein rissfreies Laminat dimensioniert. Im Gegensatz dazu kann auch festigkeitsorientiert dimensioniert werden. Dann richtet sich die Berechnung danach, ob das Bauteil bei maximaler Beanspruchung versagt. Das Versagen einzelner Schichten kann dabei erlaubt sein, solange nicht das ganze Bauteil zerstört wird.

Voraussetzungen für das Berechnungsverfahren ist die Kenntnis über die mechanischen Daten der eingesetzten Materialien. Die Anzahl und Art der benötigten Daten hängt von der verwendeten Berechnungsmethode und dem gewünschten Materialaufbau ab. Oftmals liegen die benötigten Kennwerte für die gewünschte Materialkombination nicht vor. Mittels theoretischer Ansätze ist es möglich, aus den mechanischen Daten der einzelnen Komponenten, Faser und Matrix, diese zu berechnen. Ist die Berechnung nicht möglich, sind zerstörende mechanische Prüfungen zur Ermittlung der Daten notwendig.

Nachdem der bevorzugte Verfahrensschritt der Berechnung durchgeführt wurde, ist die Analyse des Ergebnisses notwendig. Speziell für Faserverbundbauteile wurden in der Vergangenheit mehrere Versagenshypothesen entwickelt. Diese Theorien unterscheiden sich

- in den betrachteten Belastungen (statisch oder dynamisch),
- in der Bewertung der auftretenden Versagensarten (Faserbruch, Matrixbruch, Grenzflächenversagen) und
- in den grundsätzlichen Überlegungen, ob festigkeitsorientiert oder gegen maximale Dehnungen dimensioniert werden soll.

In einem letzten bevorzugten Schritt wird die Auslegung der Faserverbundbauteile ausgewertet. Die vielfältigen Variationsmöglichkeiten der Materialien, der Faserorientierungen, die freie Formgestaltung und Fertigungseinflüsse erschweren die rein theoretische Betrachtung des Problems. Eine Fertigung von Prototypen und praxisnahe Tests können somit bevorzugt sein. Erst diese Ergebnisse geben häufig (sicheren) Aufschluss darüber, ob das Bauteil in der Praxis eingesetzt werden kann.

In einer bevorzugten Ausführungsform erfolgt die geometrische und/oder strukturelle Auslegung des Rotorblattes wie folgt: Bevorzugt wird zunächst eine Auswahl eines Rotorblatt-Profils anhand der Kennwerte (Auftriebsbeiwert, Widerstandbeiwert und Geometrie) und Eigenschaften aus öffentlichen Datenbanken getroffen. Anschließend wird bevorzugt in einem ersten Berechnungsprogramm, insbesondere das Computerprogrammprodukt *QBlade (TU Berlin)*, mit den erwarteten Belastungen und gewünschten Abmessungen ein grober Rotorblattentwurf erstellt. Nachfolgend wird anhand von CAD-Programmprodukten, bevorzugt *Inventor (Autodesk GmbH)* und/oder *Rhino (3DOne GmbH)* ein grober Entwurf zu einem Rotorblatt generiert. Mithilfe von weiteren Computerprogrammprodukten, bevorzugt *ANSYS (ANSYS Inc.)*, wird ein Modell des Rotorblattes vernetzt und anschließend wird der umgebende Raum zur CFD (Computational Fluid Dynamics) Berechnung definiert. Dies wird insbesondere zur Strömungs- und Belastungsberechnung eingesetzt. Das Rotorblatt wird den Erkenntnissen entsprechend bevorzugt erneut angepasst und anschließend mit der geänderten Geometrie erneut berechnet. Abschließend wird ein benötigter Laminataufbau mit einer weiteren Software, bevorzugt *ANSA (BETA CAE Systems)* und/oder *Abaqus (Simulia)* konzipiert und berechnet.

Der Fachmann ist in der Lage, ein solches Verfahren mit der genannten Software oder den bekannten Alternativen ohne unzumutbaren Aufwand durchzuführen. Die sich daraus ergebende Form unterscheidet sich wesentlich von denen des Standes der Technik und ist für den Fachmann von diesen unterscheidbar.

In einer weiteren bevorzugten Ausführungsform ist das Verfahren dadurch gekennzeichnet, dass die Rotorblatt-Halbschalen so miteinander verbunden werden, dass zu der Faserorientierung jeder Faserlage der ersten Rotorblatt-Halbschale in Bezug auf eine Spiegelebene entsprechend eine Faserorientierung einer Faserlage der zweiten Rotorblatt-Halbschale gespiegelt vorliegt und die Spiegelebene eine Schnittebene entlang der Längsachse des Rotorblattes ist.

In einer weiteren bevorzugten Ausführungsform ist das Verfahren dadurch gekennzeichnet, dass die Rotorblatt-Halbschalen so miteinander verbunden werden, dass zu der Faserorientierung jedes faserverstärkten Thermoplast-Halbzeugs der ersten Rotorblatt-Halbschale in Bezug auf eine Spiegelebene entsprechend eine Faserorientierung eines faserverstärkten Thermoplast-Halbzeugs der zweiten Rotorblatt-Halbschale gespiegelt vorliegt und die Spiegelebene eine Schnittebene entlang der Längsachse des Rotorblattes ist. Um die Biege-Torsions-Kopplung auszunutzen, muss das Laminat symmetrisch, aber unausgeglichen (s. auch Fig. 3 (b) und die zugehörigen Erläuterungen) aufgebaut sein.

Damit die Fasern deckungsgleich übereinander liegen, werden diese, zur Ausnutzung der Biege-Torsions-Kopplung, auf der Rotorblattoberseite mit einem Winkel von bevorzugt 25° und auf der Unterseite mit einem Winkel von bevorzugt -25° abgelegt. Zusätzlich werden einzelne Lagen mit bevorzugt 0° und 90° - Orientierung für die benötigte Festigkeit des Rotorblattes eingesetzt.

In einer bevorzugten Ausführungsform werden 4 -30 Thermoplast-Halbzeuge und/oder Faserlagen übereinander zu einem Thermoplast-Stapel und/oder Kunststoff-Stapel gelegt, stärker bevorzugt 6-24 Thermoplast-Halbzeuge und/oder Faserlagen und insbesondere 10-20 Thermoplast-Halbzeuge und/oder Faserlagen. Gerade die speziell ausgewählten Wertbereiche ermöglichen den Koppel-Effekt, wobei darüber hinaus auch eine ausreichende Stabilität und Steifigkeit eines Rotorblattes erhalten wird.

Es kann auch bevorzugt sein, dass die Faserlagen als Duroplast-Halbzeuge ausgestaltet sind. Das bedeutet, dass die Faserlagen von einer Duroplast Matrix umgegeben sind und übereinander zu einem Kunststoff-Stapel (Duroplast-Stapel) gelegt werden. Weiterhin kann auch bevorzugt sein, dass die Faserlagen mit einem Duroplast benetzt (nass) sind und zu einem Kunststoff-Stapel übereinandergelegt werden. Über dies ist alternativ bevorzugt vorgesehen, dass die Fahrerlagen trocken übereinandergelegt werden und anschließend unter Vakuum mit dem Duroplast infundieren und aushärten.

Wie schon beschrieben umfasst der Thermoplast-Stapel und/oder Kunststoff-Stapel bevorzugt mehrere Lagen faserverstärkte Thermoplast-Halbzeuge und/oder Faserlagen. Die Lagen weisen dabei eine Orientierung von 90°; 0° und 25° bzw. -25° auf, abhängig von der zu formenden Blatthälfte (Rotorblattvorderseite bzw. Blattrückseite). Die Faserorientierung und die Reihenfolge der einzelnen Lagen werden durch entsprechende oben beschriebenen Programme (ANSA und Abaqus) berechnet.

In einer bevorzugten Ausführungsform weisen die Faserlagen in einem der Thermoplast-Stapel und/oder Kunststoff-Stapel mindestens eine erste und eine zweite Orientierung auf, wobei die erste Orientierung vorzugsweise zwischen 15 - 35° zu einer Längsachse orientiert ist und die zweite Orientierung vorzugsweise zwischen -15 - -35° zu der Längsachse orientiert ist. Besonders bevorzugt ist die erste Orientierung zwischen 20 - 30°, noch bevorzugter zwischen 23 - 27°. Die zweite Orientierung ist besonders bevorzugt zwischen - 20 - -30°, noch bevorzugter zwischen -23 - -27°.

In einer weiteren bevorzugten Ausführungsform weisen die Faserlagen in einem der Thermoplast-Stapel und/oder Kunststoff-Stapel mindestens eine erste, zweite, dritte und vierte Orientierung auf, wobei die dritte Orientierung vorzugsweise zwischen 75 - 100°, besonders bevorzugt 80 - 95°, noch bevorzugter ca. 90° ist. Die vierte Orientierung ist vorzugsweise zwischen -10 - 15°, besonders bevorzugt -5° - 5°, noch bevorzugter ca. 0°.

Diese Orientierungen können abwechselnd sein, z. B. wenn die inneren Schichten abwechselnd die erste und die zweite Ausrichtung aufweisen. Es kann auch bevorzugt sein, dass die aufeinanderliegenden Schichten zwischen allen vier Orientierungen abwechseln. Besonders bevorzugt ist es, dass der Thermoplast-Stapel und/oder Kunststoff-Stapel mindestens eine Schicht mit der dritten Orientierung und mindestens eine Schicht mit der vierten Orientierung aufweist. Es wurde festgestellt, dass dies die Festigkeit des Rotorblatts und seine Lebensdauer deutlich erhöht. Die erste und zweite Orientierungen tragen jedoch auch erheblich zum Koppeleffekt bei, wodurch das Rotorblatt den Neigungswinkel entsprechend der Windgeschwindigkeiten anpassen und selbstständig seine Drehzahl konstant hält.

Es ist besonders bevorzugt, dass Kohlenstofffasern mit diesen bevorzugten Orientierungen verwendet werden. Es wurde überraschenderweise festgestellt, dass Kohlenstofffasern aus benachbarten Schichten für starke elastische Biegungs-Torsions-Effekte sorgen, ohne das Rotorblatt strukturell zu beschädigen.

Die verbesserten Torsionseffekte, die sich aus den bevorzugten Faserorientierungen ergeben, stellen eine wesentliche Verbesserung gegenüber den komplexen Systemen des Standes der Technik dar und sind gleichzeitig einfach herzustellen. Es ist im Sinne der Erfindung möglich, dass die Faserorientierungen zur Verbesserung eines Rotorblatts beliebiger Strukturform angewendet werden können, ohne dass die Methode zur Berechnung der Struktur des Rotorblatts angewendet werden muss, obwohl die kombinierte Wirkung beider Aspekte der Erfindung zu einem überraschenden und synergistischen Effekt führt. Die Faserorientierung bzw. -ausrichtung in einem faserverstärkten Thermoplast-Halbzeug und/oder einer Faserlage richtet sich bevorzugt nach der Produktionsrichtung des Thermoplast-Halbzeugs und/oder des in dem Thermoplast-Halbzeugs umfassten textilen Gebildes (Vlies, Gelege, Gewebe) und/oder im Allgemeinen der Produktionsrichtung der Faserlage. Die Produktionsrichtung eines -Halbzeugs und/oder des in dem Thermoplast-Halbzeugs umfassten textilen Gebildes (Vlies, Gelege, Gewebe) und/oder der Faserlage definiert dabei bevorzugt eine 0°-Richtung. In Abhängigkeit dieser Richtung ist die Faserorientierung der jeweiligen Lage bzw. des faserverstärkten Thermoplast-Halbzeugs angeordnet. Die Ausrichtung der Faserorientierung der einzelnen Lagen wird mit einem Winkel zur Produktionsrichtung angegeben.

Dem durchschnittlichen Fachmann ist klar, dass alle in diesem Dokument genannten Winkel einen gewissen Toleranzbereich aufweisen können. Dementsprechend sind naheliegende Winkel mit einer Abweichung von bevorzugt +/- 10°, besonders bevorzugt von +/- 5° und stärker bevorzugt +/- 2° zu den genannten Winkeln ebenfalls umfasst.

Begriffe wie "im Wesentlichen", "ungefähr", "etwa", "ca." etc. beschreiben bevorzugt einen Toleranzbereich von weniger als $\pm$ 40%, bevorzugt weniger als $\pm$ 20%, besonders bevorzugt weniger als $\pm$ 10 %, noch stärker bevorzugt weniger als $\pm$ 5% und insbesondere weniger als $\pm$ 1% und umfassen stets den exakten Wert. "Ähnlich" beschreibt bevorzugt Größen die "ungefähr gleich" sind. "Teilweise" beschreibt bevorzugt zu mindestens 5 %, besonders bevorzugt zu mindestens 10 %, und insbesondere zu mindestens 20 %, in einigen Fällen zu mindestens 40 %.

In einer weiteren bevorzugten Variante weist jede Schicht des Thermoplast-Stapels und/oder Kunststoff-Stapels eine Dicke von etwa 0,1mm - 0,5 mm auf. Dies ist in vorteilhafter Weise materialsparend und daher besonders wirtschaftlich.

Im Sinne der Erfindung ist die Spiegelebene bevorzugt als Schnittebene entlang einer Längsachse eines Rotorblattes zu sehen. Darüber hinaus ist die Spiegelebene als die Ebene zu betrachten, welche die erste und zweite Rotorhalbschale voneinander trennt. Die Halbschalen sind dabei bevorzugt spiegelverkehrt ausgestaltet, sodass sie sich gegenseitig unter Hinzunahme eines Rotorblattfußes zu einem Rotorblatt ergänzen.

In einer weiteren bevorzugten Ausführungsform ist das Verfahren dadurch gekennzeichnet, dass die Heizquelle ein Infrarotstrahler ist und den Thermoplast-Stapel von einer Ober- und Unterseite erwärmt. Der Infrarotstrahler ermöglicht es vorteilhaft, den Thermoplast-Stapel gleichmäßig, schnell und sicher aufzuheizen. Durch verschiedene Sensoren kann darüber hinaus die ausgestrahlte Strahlung und dementsprechend die Temperatur sehr gut reguliert werden.

In einer bevorzugten Ausführungsform wird der Thermoplast-Stapel auf eine Temperatur zwischen 100°C und 350°C erwärmt, stärker bevorzugt 120°C und 250°C und besonders stark bevorzugt 180°C bis 220°C. Die Erwärmung des Thermoplast-Stapels führt vorteilhaft zu einer verbesserten Verformbarkeit im Pressverfahren, sodass zum einen die Prozesszeit verkürzt werden kann und andererseits die aufzubringende Verformungsenergie sehr geringgehalten werden kann. Die Erwärmung des Materials führt darüber hinaus zu einer verbesserten Strukturintegrität und Stabilität der herzustellenden Halbschalen bzw. des Rotorblattes.

In einer weiteren bevorzugten Ausführungsform können auch weitere/andere Erwärmungsanlagen verwendet werden, welche das Erwärmen des Thermoplast-Stapels auf eine oben beschriebene (Ziel-) Temperatur ermöglichen. Diesbezüglich können bspw. auch Abwärme von anderweitigen Bearbeitungsmaschinen und/oder Bearbeitungsverfahren verwendet werden, sodass das Herstellungsverfahren besonders energieeffizient erfolgen kann.

In einer weiteren bevorzugten Ausführungsform ist das Verfahren dadurch gekennzeichnet, dass das Fügeverfahren zu einer formschlüssigen, kraftschlüssigen und/oder stoffschlüssigen Verbindung führt. Insbesondere eine stoffschlüssige Verbindung führt zu einer vorteilhaft langen Lebensdauer mit überraschend hoher Stabilität. Eine formschlüssige und kraftschlüssige Verbindung führt hingegen zu einer Verbindung, die in einfacher Weise ohne großen Energieeintrag erhalten werden kann. Bevorzugt können auch alle Verbindungstypen miteinander kombiniert werden.

In einer weiteren bevorzugten Ausführungsform ist das Verfahren dadurch gekennzeichnet, dass das Fügeverfahren ausgesucht ist aus der Gruppe umfassend: Löten, Schrauben, Nieten, Kleben, Schweißen.

In einer weiteren bevorzugten Ausführungsform betrifft die Erfindung ein Rotorblatt für eine Windenergieanlage, bevorzugt hergestellt nach dem Verfahren der eingangs genannten Art, umfassend: eine erste und eine zweite Rotorblatt-Halbschale sowie einen Rotorblatt-Fuß dadurch gekennzeichnet, dass

die Rotorblatt-Halbschalen jeweils aus einem faserverstärkten Kunststoff-Stapel bestehen, welcher eine Vielzahl von unidirektionalen Faserlagen umfasst,

> o wobei aufeinanderfolgende Faserlagen abhängig von Berechnungsverfahren und daraus resultierender geometrischer und/oder struktureller Auslegung des Rotorblattes unterschiedliche Faserorientierungen aufweisen und

> o wobei die geometrische Auslegung in Bezug auf einen Schwachwindbetrieb erfolgt und die strukturelle Auslegung in Bezug auf einen anisotropen Koppeleffekt erfolgt und

> o die Rotorblatt-Halbschalen sowie der Rotorblatt-Fuß formschlüssig, kraftschlüssig und/oder stoffschlüssig verbunden vorliegen.

In einer weiteren bevorzugten Ausführungsform betrifft die Erfindung ein Rotorblatt für eine Windenergieanlage, bevorzugt hergestellt nach dem Verfahren der eingangs genannten Art, umfassend: eine erste und eine zweite Rotorblatt-Halbschale sowie einen Rotorblatt-Fuß dadurch gekennzeichnet, dass

die Rotorblatt-Halbschalen jeweils einen faserverstärkten Kunststoff-Stapel umfassen, welcher eine Vielzahl von unidirektionalen Faserlagen umfasst,

> o wobei aufeinanderfolgende Faserlagen unterschiedliche Faserorientierungen aufweisen und

> o wobei eine Faserorientierung jeder Faserlage für die Erzeugung eines anisotropen Koppeleffektes konfiguriert ist, um einen Neigungswinkel des Rotorblatts an einer Windgeschwindigkeit anzupassen,

> o wobei vorzugsweise eine geometrische Form des Rotorblattes für einen Schwachwindbetrieb konfiguriert ist und

> o wobei die Rotorblatt-Halbschalen sowie der Rotorblatt-Fuß formschlüssig, kraftschlüssig und/oder stoffschlüssig verbunden vorliegen.

In einer weiteren bevorzugten Ausführungsform betrifft die Erfindung ein Rotorblatt für eine Windenergieanlage, bevorzugt hergestellt nach dem Verfahren der oben genannten Art umfassend: eine erste und eine zweite Rotorblatt-Halbschale sowie einen Rotorblatt-Fuß dadurch gekennzeichnet, dass die Rotorblatt-Halbschalen jeweils aus einem faserverstärkten Thermoplast-Stapel bestehen, welcher eine Vielzahl von unidirektionalen faserverstärkten Thermoplast-Halbzeugen umfasst,

> ∘ wobei aufeinanderfolgende Thermoplast-Halbzeuge abhängig von Berechnungsverfahren und daraus resultierender geometrischen und/oder struktureller Auslegung des Rotorblattes unterschiedliche Faserorientierungen aufweisen und

> ∘ wobei die geometrische Auslegung in Bezug auf einen Schwachwindbetrieb erfolgt und die strukturelle Auslegung in Bezug auf einen anisotropen Koppeleffekt erfolgt und

> ∘ die Rotorblatt-Halbschalen sowie der Rotorblatt-Fuß formschlüssig, kraftschlüssig und/oder stoffschlüssig verbunden vorliegen.

Das erfindungsgemäße Rotorblatt ist besonders flexibel gestaltet, sodass es sich vorteilhaft ohne zusätzliche Verstellsysteme den Windverhältnissen (äußeren Parametern) anpasst. Dies kann entweder durch einen Teilbereich des Rotorblattes oder durch das Rotorblatt in seiner Gesamtheit erreicht werden. Hierzu dient insbesondere die anisotrope Eigenschaft von Fasern, bevorzugt Kohlenstofffasern, welche in einem angepassten und faserverstärkten Kunststoffhalbzeug ausgenutzt werden. Der hier zum Einsatz kommende Effekt der Biege-Torsions-Kopplung (s. auch Fig. 2 und Fig. 3) bewirkt, dass sich das Rotorblatt bei zunehmender Windlast in Axialerrichtung verbiegt und es zusätzlich gezielt tordiert wird, um sich so in und/oder aus dem Wind zu drehen und dadurch selbstständig reguliert.

Das erfindungsgemäße Rotorblatt ist besonders vorteilhaft als ein leichtes und adaptives Rotorblatt für kleine Windenergieanlagen anzusehen. Wobei dieses an bestehenden Anlagen nachgerüstet werden kann. Ein weiterer Vorteil des Rotorblattes ist die adaptive Anpassung - ohne Hilfsmittel - an äußere Betriebsparameter durch den in Fig. 2 und Fig. 3 beschriebenen Koppeleffekt, welche durch die erfindungsgemäße Herstellung erreicht wird.

Die Vorteile und bevorzugten Ausführungsformen des erfindungsmäßen Verfahrens sind analog auf das erfindungsgemäße Rotorblatt sowie die erfindungsgemäße Windenergieanlage zu übertragen und umgekehrt.

In einer weiteren bevorzugte Ausführungsform ist das Rotorblatt dadurch gekennzeichnet, dass zu jeder Faserorientierung einer Faserlage der ersten Rotorblatt-Halbschale in Bezug auf eine Spiegelebene eine gespiegelte Faserorientierung der zweiten Rotorblatt-Halbschale vorliegen, wobei die Spiegelebene eine Schnittebene entlang der Längsachse des Rotorblattes ist.

In einer weiteren bevorzugte Ausführungsform ist das Rotorblatt dadurch gekennzeichnet, dass zu jeder Faserorientierung eines faserverstärkten Thermoplast-Halbzeugs der ersten Rotorblatt-Halbschale in Bezug auf eine Spiegelebene eine gespiegelte Faserorientierung eines faserverstärkten Thermoplast-Halbzeugs der zweiten Rotorblatt-Halbschale vorliegen. Die Spiegelung weist besonders Vorteile im Hinblick auf die Stabilität auf.

In einer weiteren bevorzugte Ausführungsform ist das Rotorblatt dadurch gekennzeichnet, dass die Spiegelebene eine Schnittebene entlang der Längsachse des Rotorblattes ist.

In einer weiteren bevorzugten Ausführungsform weist das Rotorblatt in seiner Längsausdehnung bevorzugt eine Größe zwischen 0,5 m und 6 m, stärker bevorzugt eine Größe von 1m bis 4 m und insbesondere eine Größe 1,2 m bis 1,6 m auf. Die Längsausdehnung ist dabei bevorzugt die größtmögliche Ausdehnung des Rotorblattes.

In einer weiteren bevorzugten Ausführungsform weist das Rotorblatt in seiner Querausdehnung bevorzugt eine Größe zwischen 0,05m bis 2m, stärker bevorzugt 0,1 m bis 1m und insbesondere eine Größe von 0,2m bis 0,5 m auf. Als Querausdehnung wird bevorzugt eine Ausdehnung senkrecht zur Längsausdehnung bezeichnet.

In einer weiteren bevorzugten Ausführungsform umfasst das Rotorblatt eine selbsttragende Konstruktion mit einem hohlen oder homogenen Inneren. Das heißt, dass das Rotorblatt außer den faserverstärkten Stapeln vorzugsweise keine weiteren inneren Strukturteile aufweist. Dies ist besonders vorteilhaft, um die Herstellung zu vereinfachen und die Wartung des Rotorblatts zu reduzieren.

In einer weiteren bevorzugten Ausführungsform umfassen die Faserlagen des Rotorblattes so genannte "endlose" Faser. Das heißt, die verwendeten Faser sind vorzugsweise beliebig lang. Vorzugsweise beträgt die durchschnittliche Länge der verwendeten Fasern mindestens 20 % der Länge des Rotorblatts, besonders bevorzugt mindestens 40 %. Durch eine solche Faserlänge wurde festgestellt, dass der Koppel-Effekt wesentlich erhöht werden konnte. Es wurde auch festgestellt, dass sich die Integrität des Rotorblatts verbessert, wenn endlose Fasern verwendet werden.

In einer weiteren bevorzugten Ausführungsform betrifft die Erfindung eine Windenergieanlage umfassend ein oder mehrere Rotorblätter dadurch gekennzeichnet, dass die Rotorblätter abhängig von der Drehzahl und/oder Windstärke unter Ausnutzung eines anisotropen Koppeleffektes verformbar sind und die Windenergieanlage dadurch passiv an Umgebungsparameter anpassbar ist. Die Windenergieanlage ist bevorzugt als ein System aus einer Vielzahl von bevorzugt mindestens drei Rotorblättern und einem Rotor ausgestaltet, wobei diese in einer Höhe platziert sind.

Wie geschildert, sind die erfindungsgemäßen Rotorblätter verformbar und passen sich den Umgebungsparametern an. Dies geschieht dadurch, dass sich die Rotorblätter bei höheren Windgeschwindigkeiten in Schubrichtung verbiegen und sich durch die Biege-Torsions-Kopplung gleichzeitig mit tordiert. Diesbezüglich weisen die Windenergieanlagen eine sehr hohe Lebensdauer auf und sind vorteilhaft besonders wartungsarm.

In bevorzugten Ausführungsformen können auch eine Vielzahl von Windenergieanlagen umfasst sein, welche gemeinsam Windenergie in Strom wandeln und diese in ein Stromnetz einspeisen.

**FIGUREN**

Im Folgenden soll die Erfindung an Hand von Figuren näher erläutert werden, ohne auf diese beschränkt zu sein.

Kurzbeschreibung der Abbildungen

**Fig. 1**    Ablaufdiagramm bevorzugter Verfahren zur Herstellung eines Rotorblattes

**Fig. 2**  Schematische Darstellung der Koppeleffekte (a) einer unidirektionalen Einzelschicht und (b) im anisotropen Schichtverbund

**Fig. 3**  Vergleich zwischen (a) einem symmetrischen und ausgeglichenen Laminataufbau und einem (b) symmetrischen und unausgeglichenem Laminataufbau zur Applikation der Biege-Torsions-Kopplung im anisotropen Schichtverbund.

Detaillierte Beschreibung der Abbildungen

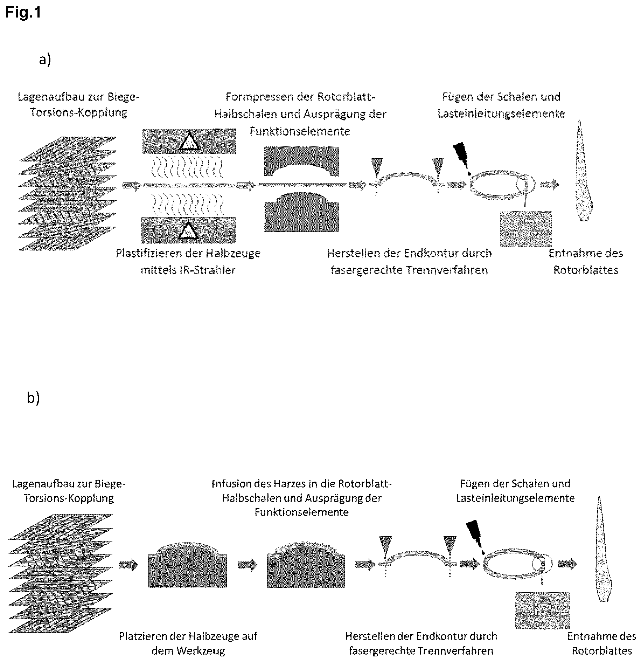

**Fig.1** a) zeigt ein schematisches Ablaufdiagramm eines bevorzugten Verfahrens zur Herstellung eines Rotorblattes für eine Windenergieanlage. In einem ersten Schritt wird bevorzugt das Rotorblatt geometrisch ausgelegt. Hierbei wird die Form des Rotorblattes mittels Berechnungsprogrammen bevorzugt in der Art geometrisch angepasst, sodass dieses für den Schwachwindbetrieb optimiert ist. Anschließend wird bevorzugt der strukturelle Aufbau des Rotorblattes definiert. Der strukturelle Aufbau der einzelnen Laminatschichten wird mithilfe eines weiteren Berechnungsverfahrens bevorzugt so angepasst, dass das Rotorblatt in die Lage versetzt wird, einen breiten Bereich von Windgeschwindigkeiten "abzudecken". Durch die passive Lastminderung und die Ausnutzung anisotroper Koppeleffekte bei hohen Windgeschwindigkeiten fährt der Rotor früher an und muss erst später abgebremst werden. Weiterhin werden die unidirektionalen faserverstärkten Thermoplast-Halbzeuge bevorzugt in vorher berechneten unterschiedlichen Lagen übereinander abgelegt, um den gewünschten Laminataufbau zur Ausnutzung des anisotropen Koppeleffektes zu erreichen. Während oder nach dem Ablegen werden sie bevorzugt miteinander vorkonsolidiert. In einem weiteren Schritt wird das Halbzeug zur besseren Verarbeitung erwärmt. Es kann von beiden Seiten mittels einer Wärmequelle in einen semiplastischen Zustand gebracht werden, z.B. durch Nutzung von IR-Strahlung. Die vorgeheizten Halbzeuge werden anschließend in einer Formpresse in die finale Kontur einer Halbschale gepresst. Überschüssiges Material wird bevorzugt von den Außenrändern der Formlinge entfernt und für einen Füge-Prozess vorbereitet. Die einzelnen Schalenelemente werden mit einem geeigneten Verfahren miteinander verbunden. Bei diesem Prozess wird auch der für das Rotorblatt benötigte Fuß als drittes Element zwischen die einzelnen Halbschalen positioniert. Der Fuß als Lasteinleitungselemente ist modular konzipiert und so gestaltet, dass er kompatibel zu bestehenden Anlagen ist. Abschließend wird das Rotorblatt bevorzugt aus dem Werkzeug entnommen und die Kontur von Prozessrückständen gesäubert.

**Fig. 1** b) zeigt ein schematisches Ablaufdiagramm eines weiteren bevorzugten Verfahrens zur Herstellung eines Rotorblattes für eine Windenergieanlage. Auch in diesem Verfahren wird zunächst ein Rotorblatt anhand eines Berechnungsverfahrens ausgelegt. Anschließend wird eine Vielzahl von unidirektionalen Faserlagen in eine Werkzeug-Form einer ersten Rotorblatt-Halbschale abgelegt, wobei aufeinanderfolgende Faserlagen eine unterschiedliche Faserorientierungen aufweisen. Anstelle eines thermischen Verfahrens werde die Faserlagen unter Vakuum mit einem Gemisch aus einem Harz und einem Härter infundiert und ausgehärtet, sodass ein faserverstärkter Duroplast-Stapel in der Form einer erste Rotor-Halbschale erhalten wird. Die einzelnen Schalenelemente werden mit einem geeigneten Verfahren miteinander verbunden. Bei diesem Prozess wird auch der für das Rotorblatt benötigte Fuß als drittes Element zwischen die einzelnen Halbschalen positioniert.

Der Fuß als Lasteinleitungselemente ist modular konzipiert und so gestaltet, dass er kompatibel zu bestehenden.

**Fig. 2** ist eine schematische Darstellung der Koppeleffekte in (a) einer unidirektionalen Einzelschicht und (b) im anisotropen Schichtverbund. Das erfindungsgemäße Rotorblatt nutzt insbesondere den sog. anisotropen Koppeleffekt aus, dies führt zu wesentlichen vorteilhaften Eigenschaften gegenüber dem Stand der Technik. Der Koppeleffekt gestaltet sich wie folgt:

In einem anisotropen Laminat werden die mechanischen Eigenschaften mithilfe der klassischen Laminattheorie beschrieben. Die konstruktive Beziehung zwischen den in der Ebene liegenden Grundspannungen ($\sigma_x$, $\sigma_y$, $\sigma_{xy}$) und den dazugehörigen Dehnungen ($\varepsilon_x$, $\varepsilon_y$, $c_{xy}$) werden in Form folgender Matrix ausgedrückt:

$$\begin{bmatrix} \sigma_x \\ \sigma_y \\ \sigma_{xy} \end{bmatrix} = \begin{bmatrix} Q_{11} & Q_{12} & Q_{16} \\ Q_{12} & Q_{22} & Q_{26} \\ Q_{16} & Q_{26} & Q_{66} \end{bmatrix} \begin{bmatrix} \varepsilon_x \\ \varepsilon_y \\ \varepsilon_{xy} \end{bmatrix}$$

Wenn in einem Laminat Lagen vorliegen, deren Fasern an keiner der Hauptachsen orientiert sind [0°, 90°], führt dies dazu, dass Schubspannungen/-dehnungen mit Normalspannungen/- dehnungen gekoppelt auftreten. Das heißt, die Werte für die Terme $Q_{16}$ und $Q_{26}$ werden ungleich null. Der daraus resultierende Zustand wird als Koppeleffekt bezeichnet, welcher dazu führt, dass unter einer einachsigen Biegebelastung eine Biegung und eine Torsion hervorgerufen wird. Schematisch dargestellt wird dieser Effekt in Fig. 3 (a) anhand einer einzelnen Lage und einem Schichtverbund (b).

Der in **Fig. 3** (b) dargestellte Laminataufbau führt zur Zugbeanspruchung in der unteren Hälfte und Druckbeanspruchung in der oberen Hälfte des Schichtverbundes. Aufgrund der Annahme einer idealen Anhaftung der einzelnen Lagen kommt es durch die Überlagerung der Schubverformungen zu einer Torsion auf Laminatebene. Dabei spricht man von der Biege-Torsions-Kopplung (kurz BTK).

Von diesen Koppeleffekten wird in einem speziellen Modellierungs- und Dimensionierungsprozess für die Auslegung von Tragflächen und anderen umströmten Bauteilen Gebrauch gemacht. Dieser trägt den Namen aeroelastic tailoring. Dabei werden die anisotropen Eigenschaften von Schichtverbunden ausgenutzt, um die Verformung von Strömungskörpern infolge einer Fluidbelastung gezielt zu beeinflussen. Die statischen und dynamischen Eigenschaften werden dabei bevorzugt so ausgelegt, dass Ziele - wie eine optimale Leistung und Belastbarkeit - bei minimalem Materialeinsatz erreicht werden können, wodurch das Leichtbaupotential voll ausgeschöpft wird. Mit dem Einsatz gewichtsoptimierter Rotorblätter für kleine Windenergieanlagen lässt sich der Energieertrag und damit die Systemeffizienz im Schwachwindbetrieb deutlich steigern. Dies erfolgt aufgrund einer Verringerung der notwendigen Anlaufgeschwindigkeit durch Reduktion der Trägheit des Systems. Ferner können die Anlagen durch die adaptive Anpassung der Rotorblattgeometrie bei hohen Windgeschwindigkeiten durch die einsatzoptimierte passive Lastreduktion effizient betrieben werden. Demzufolge können die Blätter an den verschiedensten Standorten optimale Ergebnisse erzielen.

Die schematische Applikation eines Laminataufbaus zur gezielten Ausnutzung der BTK auf ein Rotorblatt wird nachfolgend in **Fig. 3** dargestellt.

In **Fig. 3** (a) wird ein symmetrisches und ausgeglichenes Laminat dargestellt, dessen Fasern sich entlang der Hauptachsen orientieren. Symmetrie impliziert dabei bevorzugt, dass die obere Hälfte des Laminates durch Spiegelung der unteren Hälfte an der Laminatmittelebene erzeugt werden kann. Ausgeglichen bedeutet bevorzugt, dass zu jeder Lage in +θ Faserausrichtung eine entsprechende Lage in -θ Orientierung relativ zur Hauptachse existiert. Durch die Strömung über die Rotorblätter wird eine Auftriebskraft erzeugt, welche eine Biegebelastung bewirkt. Dabei unterliegt der obere Teil des Blattes einer Druck- und der untere einer Zugbelastung. Die Verformung der Struktur in Bezug auf die Hauptachse ist in diesem Fall orthotrop, da keine Koppeleffekte auftreten.

Wenn ein symmetrisches, jedoch unausgeglichenes Laminat verwendet wird, wie in **Fig. 3** (b) schematisch dargestellt ist, weist dieses durch das Aufbringen einer Biegung eine asymmetrische Steifigkeit in Bezug zur Hauptachse auf. Dadurch wird auf Laminatebene eine Zug-Schub-Kopplung in der unteren sowie eine Druck-Schub-Kopplung in der oberen Hälfte des Blattes erzeugt.

**Patentansprüche**

1. Verfahren zur Herstellung eines Rotorblattes für eine Windenergieanlage
   **dadurch gekennzeichnet, dass**

   a) das Rotorblatt über Berechnungsverfahren ausgelegt wird;
   b) abhängig von der Auslegung ein faserverstärkter Kunststoff-Stapel mit einer Vielzahl von unidirektionalen Faserlagen automatisiert bereitgestellt wird, wobei aufeinanderfolgende Faserlagen eine unterschiedliche Faserorientierung aufweisen;
   c) der Kunststoff-Stapel zu einer Rotorblatt-Halbschale geformt wird;
   d) die erste Rotorblatt-Halbschale und eine zweite Rotorblatt-Halbschale sowie ein Rotorblattfuß über ein Fügeverfahren miteinander verbunden werden, wobei der Rotorblattfuß zwischen beiden Halbschalen positioniert ist, sodass ein Rotorblatt erzeugt wird.

2. Verfahren nach Anspruch 1
   **dadurch gekennzeichnet, dass**
   der faserverstärkte Kunststoff-Stapel als ein faserverstärkter Thermoplast-Stapel ausgestaltet ist,

   - wobei abhängig von der Auslegung eine Vielzahl von unidirektionalen faserverstärkten Thermoplast-Halbzeugen übereinander zu dem Thermoplast-Stapel abgelegt werden;
   - wobei aufeinanderfolgende Thermoplast-Halbzeuge unterschiedliche Faserorientierungen aufweisen;
   - wobei der Thermoplast-Stapel über einer Heizquelle erwärmt wird, bis der Thermoplast-Stapel einen semiplastischen Zustand erreicht;
   - wobei der erwärmte Thermoplast-Stapel in einer Formpresse zu einer ersten Rotorblatt-Halbschale gepresst wird.

3. Verfahren nach Anspruch 1
   **dadurch gekennzeichnet, dass**
   der faserverstärkte Kunststoff-Stapel als ein faserverstärkter Duroplast-Stapel ausgestaltet ist,

   - wobei eine Vielzahl von unidirektionalen Faserlagen in eine Form einer ersten Rotorblatt-Halbschale abgelegt werden,
   - wobei aufeinanderfolgende Faserlagen eine unterschiedliche Faserorientierungen aufweisen;
   - wobei die Faserlagen unter Vakuum mit einem Gemisch aus einem Harz und einem Härter infundiert und ausgehärtet, sodass eine erste Rotor-Halbschale erhalten wird.

4. Verfahren nach einem oder mehreren der vorhergehenden Ansprüche
   **dadurch gekennzeichnet, dass**
   das Berechnungsverfahren das Rotorblatt geometrisch und/oder strukturell auslegt, wobei die geometrische Auslegung in Bezug auf einen Schwachwindbetrieb erfolgt und die strukturelle Auslegung in Bezug auf einen anisotropen Koppeleffekt erfolgt.

5. Verfahren nach einem oder mehreren der vorhergehenden Ansprüche
**dadurch gekennzeichnet, dass**
die Rotorblatt-Halbschalen so miteinander verbunden werden, dass zu der Faserorientierung jeder Faserlage der ersten Rotorblatt-Halbschale in Bezug auf eine Spiegelebene entsprechend eine Faserorientierung einer Faserlage der zweiten Rotorblatt-Halbschale gespiegelt vorliegt und die Spiegelebene eine Schnittebene entlang der Längsachse des Rotorblattes ist.

6. Verfahren nach Anspruch 2
**dadurch gekennzeichnet, dass**
die Heizquelle ein Infrarotstrahler ist und den Thermoplast-Stapel von einer Ober- und Unterseite erwärmt.

7. Verfahren nach einem oder mehreren der vorhergehenden Ansprüche
**dadurch gekennzeichnet, dass**
das Fügeverfahren zu einer formschlüssigen, kraftschlüssigen und/oder stoffschlüssigen Verbindung führt und/oder das Fügeverfahren ausgesucht ist aus der Gruppe umfassend: Löten, Schrauben, Nieten, Kleben, Schweißen.

8. Rotorblatt für eine Windenergieanlage, bevorzugt hergestellt nach einem oder mehreren der vorhergehenden Ansprüche,

umfassend: eine erste und eine zweite Rotorblatt-Halbschale sowie einen Rotorblatt-Fuß
**dadurch gekennzeichnet, dass**
die Rotorblatt-Halbschalen jeweils aus einem faserverstärkten Kunststoff-Stapel bestehen, welcher eine Vielzahl von unidirektionalen Faserlagen umfasst,

◦ wobei aufeinanderfolgende Faserlagen abhängig von Berechnungsverfahren und daraus resultierender geometrischer und/oder struktureller Auslegung des Rotorblattes unterschiedliche Faserorientierungen aufweisen und
◦ wobei die geometrische Auslegung in Bezug auf einen Schwachwindbetrieb erfolgt und die strukturelle Auslegung in Bezug auf einen anisotropen Koppeleffekt erfolgt und
◦ die Rotorblatt-Halbschalen sowie der Rotorblatt-Fuß formschlüssig, kraftschlüssig und/oder stoffschlüssig verbunden vorliegen.

9. Rotorblatt nach Anspruch 8
**dadurch gekennzeichnet, dass**
zu jeder Faserorientierung einer Faserlage der ersten Rotorblatt-Halbschale in Bezug auf eine Spiegelebene eine gespiegelte Faserorientierung der zweiten Rotorblatt-Halbschale vorliegen, wobei die Spiegelebene eine Schnittebene entlang der Längsachse des Rotorblattes ist.

10. Windenergieanlage umfassend ein oder mehrere Rotorblätter nach Anspruch 8 und/oder Anspruch 9
**dadurch gekennzeichnet, dass**
die Rotorblätter abhängig von der Drehzahl und/oder Windstärke unter Ausnutzung eines anisotropen Koppeleffektes verformbar sind und die Windenergieanlage dadurch passiv an Umgebungsparameter anpassbar ist.

**Fig.1**

a)

Lagenaufbau zur Biege-
Torsions-Kopplung

Formpressen der Rotorblatt-
Halbschalen und Ausprägung der
Funktionselemente

Fügen der Schalen und
Lasteinleitungselemente

Plastifizieren der Halbzeuge
mittels IR-Strahler

Herstellen der Endkontur durch
fasergerechte Trennverfahren

Entnahme des
Rotorblattes

b)

Lagenaufbau zur Biege-
Torsions-Kopplung

Infusion des Harzes in die Rotorblatt-
Halbschalen und Ausprägung der
Funktionselemente

Fügen der Schalen und
Lasteinleitungselemente

Platzieren der Halbzeuge auf
dem Werkzeug

Herstellen der Endkontur durch
fasergerechte Trennverfahren

Entnahme des
Rotorblattes

**Fig. 2**

Zug-Schub-Kopplung

(a)

Biege-Torsions-Kopplung

(b)

Mittelebene

Einspannung

Biegebelastung

Schubkomponente

Resultierende Verdrillung

Druckkomponente

Zugkomponente

**Fig.3**

(a)

Druckkomponente

Biegebelastung

Zugkomponente

(b)

Durch BTK resultierende Verdrillung

Schubkomponente infolge des Koppeleffektes

**EUROPÄISCHER RECHERCHENBERICHT**

Nummer der Anmeldung

EP 21 21 7012

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2011 076082 A1 (UNIV CHEMNITZ TECH [DE]) 22. November 2012 (2012-11-22) | 1,2,7 | INV. B29C70/22 |
| Y | * Absatz [0002] * | 3-6,8-10 | B29C70/48 |
| | * Absatz [0004] * | | F03D1/06 |
| | * Absatz [0006] * | | B29C70/20 |
| | * Absatz [0007] * | | |
| | * Absatz [0013] * | | ADD. |
| | * Absatz [0045] * | | B29D99/00 |
| | * Absatz [0047] * | | B29C70/54 |
| | * Absatz [0059] * | | B29C70/44 |
| | * Absatz [0011] * | | B29C70/38 |
| | * Absatz [0062] – Absatz [0063] * | | B29L31/08 |
| | * Absatz [0031] * | | B29C35/08 |
| | * Absatz [0033] * | | B29C70/34 |
| | ----- | | B29C70/46 |
| Y | DE 29 27 717 A1 (ZAKLADY TWORZYW SZTUCZNYCH NIT) 14. Mai 1980 (1980-05-14) | 6 | |
| | * Zusammenfassung; Abbildung 1, * | | |
| | * erster Absatz; Seite 5 * | | |
| | * 3. Absatz; Seite 16 * | | |
| | ----- | | RECHERCHIERTE SACHGEBIETE (IPC) |
| X | WO 2020/048571 A1 (VESTAS WIND SYS AS [DK]) 12. März 2020 (2020-03-12) | 1,3-5, 7-10 | B29D B29C |
| | * Zusammenfassung; Abbildungen 1,2,3,4,5 * | | F03D |
| | * Seite 13, Zeile 29 – Seite 14, Zeile 21 * | | B29L |
| | * Seite 9, Zeile 16 – Zeile 25 * | | |
| | * Seite 9, Zeile 27 – Seite 10, Zeile 16 * | | |
| | * Seite 10, Zeile 26 – Zeile 33 * | | |
| | * Seite 4, Zeile 22 – Seite 5, Zeile 9 * | | |
| | * Seite 1, Zeile 24 – Zeile 26 * | | |
| | * Seite 2, Zeile 19 – Zeile 24 * | | |
| | * Seite 2, Zeile 32 – Seite 3, Zeile 4 * | | |
| | * Seite 3, Zeile 12 – Zeile 15 * | | |
| | * Seite 3, Zeile 19 – Zeile 20 * | | |
| | * Seite 13, Zeile 9 – Zeile 16 * | | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 16. Mai 2022 | Barunovic, Robert |

EPO FORM 1503 03.82 (P04C03)

Europäisches
Patentamt

European
Patent Office

Office européen
des brevets

## EUROPÄISCHER RECHERCHENBERICHT

Nummer der Anmeldung

**EP 21 21 7012**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US H 2057 H (VEERS PAUL S [US] ET AL) 7. Januar 2003 (2003-01-07) * Zusammenfassung; Abbildung 1, * * Spalte 2, Zeile 19 – Zeile 34 * * Spalte 1, Zeile 16 – Zeile 25 * * Spalte 5, Zeile 3 – Zeile 21 * * Spalte 6, Zeile 23 – Zeile 25 * ----- | 3-5,8-10 | |
| A | Mittelstedt Christian: "Strukturmechanik ebener Laminate", , 31. Dezember 2016 (2016-12-31), Seiten 144-171, XP055920343, ISBN: 978-3-935868-99-0 Gefunden im Internet: URL:https://www.klub.tu-darmstadt.de/media /fachgebiet_klub/buchveroeffentlichungen/S trukturmechanik_ebener_Laminate_LESEPROBE. pdf [gefunden am 2022-05-11] * das ganze Dokument * ----- | 1-10 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 16. Mai 2022 | Barunovic, Robert |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
..............................................................
& : Mitglied der gleichen Patentfamilie, übereinstimmendes
   Dokument

EPO FORM 1503 03.82 (P04C03)

Seite 2 von 2

## ANHANG ZUM EUROPÄISCHEN RECHERCHENBERICHT
## ÜBER DIE EUROPÄISCHE PATENTANMELDUNG NR.

EP 21 21 7012

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-05-2022

| Im Recherchenbericht angeführtes Patentdokument | Datum der Veröffentlichung | Mitglied(er) der Patentfamilie | Datum der Veröffentlichung |
|---|---|---|---|
| DE 102011076082 A1 | 22-11-2012 | KEINE | |
| DE 2927717 A1 | 14-05-1980 | AT 374738 B | 25-05-1984 |
| | | DE 2927717 A1 | 14-05-1980 |
| | | DK 329479 A | 01-05-1980 |
| | | ES 482762 A1 | 01-04-1980 |
| | | FI 792224 A | 01-05-1980 |
| | | FR 2440267 A1 | 30-05-1980 |
| | | GB 2032833 A | 14-05-1980 |
| | | IT 1122864 B | 30-04-1986 |
| | | NL 7907948 A | 02-05-1980 |
| | | PT 69987 A | 01-08-1979 |
| | | SE 434817 B | 20-08-1984 |
| WO 2020048571 A1 | 12-03-2020 | EP 3847367 A1 | 14-07-2021 |
| | | US 2021317814 A1 | 14-10-2021 |
| | | WO 2020048571 A1 | 12-03-2020 |
| US H2057 H | 07-01-2003 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014204591 B3
- DE 102010014961 A1
- DE 102011078951 A1
- DE 102017124861 A1
- EP 2433782 B1
- DE 102017001404 A1
- EP 2295235 A1
- DE 102014221966 A1
- US 2020025178 A1
- JP 2016032929 A
- DE 102012019351 A1